# EUROPÄISCHE PATENTSCHRIFT

(11) **EP 1 340 870 B1**
(45) Veröffentlichungstag und Bekanntmachung des Hinweises auf die Patenterteilung: **18.11.2009**
(21) Anmeldenummer: 02004559.7
(22) Anmeldetag: 27.02.2002
(51) Int. Cl.: E05B 47/00, F03G 7/06, D06F 37/42

(54) **Einheit mit Memory-Metall-Aktuator für Türverriegelungen von Haushaltsgeräten**
Unit with shape memory metal actuator for doorlocks of domestic appliances
Ensemble avec actionneur à métal doué de mémoire pour verrouillage de portes d'appareils domestique

(43) Veröffentlichungstag der Anmeldung: 03.09.2003
(73) Patentinhaber: emz-Hanauer GmbH & Co. KGaA, 92507 Nabburg (DE)
(72) Erfinder: Spiessl, Georg, 92540 Willhof-Altendorf (DE); Nothaas, Josef, 93494 Waffenbrunn (DE); Dirnberger, Albert, 92431 Neunburg v.W. (DE); Zühlke, Günter, 92551 Stulln (DE)
(74) Vertreter: Beyer, Andreas

(56) Entgegenhaltungen:
- EP-A- 0 999 326
- EP-A- 1 045 141
- DE-A- 3 632 089
- DE-A- 3 731 146
- FR-A- 2 643 660
- FR-A- 2 715 429
- GB-A- 2 015 070
- US-A- 5 685 148

## Beschreibung

### Gebiet der Erfindung

Im Allgemeinen betrifft die vorliegende Erfindung Türverriegelungen für Haushaltsgeräte, wie z.B. Waschmaschinen, Spülmaschinen und Trockengeräte. Insbesondere betrifft die vorliegende Erfindung bei Türverriegelungen für Haushaltsgeräte verwendete Einrichtungen, die beim und/oder zum Öffnen/Schließen und/oder Verriegeln/Entriegeln von Häushaltsgerätetüren Kräfte erzeugen.

### Hintergrund der Erfindung

Bei Haushaltsgeräten, wie z.B. Waschmaschinen, Geschirrspülmaschinen, Wäschetrocknern, Küchenherden, Mikrowellengeräten und dergleichen, ist es aus Sicherheitsgründen erforderlich, dass Zugriffseinrichtungen, wie z.B. Gerätetüren, Klappen, Deckel, Befülleinrichtungen und dergleichen, nur unter bestimmten Bedingungen verwendet werden können. Hierfür werden im Allgemeinen Verriegelungseinheiten (im Folgenden kurz zusammenfassend als Türverriegelungen bezeichnet) für Zugriffseinrichtungen (im Folgenden kurz zusammenfassend als Gerätetüren bezeichnet) für Haushaltsgeräte verwendet.

Türverriegelungen für Haushaltsgeräte sind üblicherweise so ausgelegt, dass ein, auch nur teilweises, Öffnen einer Gerätetür beim Betrieb eines Haushaltsgerätes nicht möglich ist, um beispielsweise zu verhindern, dass bei einer laufenden Waschmaschine Wasser austritt. Dies wird im Allgemeinen dadurch erreicht, dass Türverriegelungen für Haushaltsgeräte Einheiten umfassen, die in Abhängigkeit des Betriebszustandes eines Haushaltsgerätes so gesteuert werden, dass ein Öffnen von Gerätetüren verhindert wird. Dies kann beispielsweise dadurch erreicht werden, dass die gesteuerten Einheiten einer Türverriegelung eine Entriegelung mechanischer Verbindungen zum Geschlossenhalten einer Gerätetür mittels entsprechender Wirkverbindungen verhindern. Um die jeweiligen Wirkverbindungen, die ein Entriegeln einer Gerätetür verhindern, aufzubauen, werden üblicherweise bewegbare Komponenten verwendet, die mittel elektrisch und/oder elektronisch gesteuerter Aktuatoren betätigt werden können. Beispiele für bei Haushaltsgeräten verwendeten Aktuatoren sind Elektromotoren, Elektromagnetanordnungen, Bimetalle und Dehnstoffe enthaltende Aktuatoren (z.B. Wachsmotoren).

Des weiteren ist es bei Haushaltsgeräten erforderlich, dass Gerätetüren auch bei nicht normalen Betriebszuständen (z.B. Stromausfall) geöffnet werden können. Dies wird üblicherweise durch eine Verwendung von im Folgenden als Notfallentriegelungseinheiten bezeichneten Einrichtungen bewerkstelligt, die in einem oder nach einem nicht normalen Betriebszustand eines Haushaltsgerätes Türverriegelungen in einen Zustand versetzen, in dem die Gerätetüren geöffnet werden können. Beispiele für Notverriegelungseinheiten sind mechanisch wirksame, durch Benutzer von Haushaltsgeräten betätigbare Einrichtungen (z.B. Seil- oder Bowdenzüge), Einrichtungen mit Bimetallaktuatoren oder Dehnstoffelemente enthaltenden Aktuatoren, die bei einem Stromausfall aufgrund der daraus resultierenden fehlenden Energieversorgung in einen Zustand übergehen, der ein Entriegeln bzw. Öffnen von Gerätetüren ermöglicht, und Elektromotor- und Elektromagnetanordnungen, die im Fall eines nicht normalen Betriebszustandes unter Verwendung eines von der eigentlichen Energieversorgung eines Haushaltsgerätes unabhängigen Energieversorgung aktiviert werden.

Die herkömmlicherweise bei Türverriegelungen verwendeten Aktuatoren weisen verschiedenen Nachteile auf. Türverriegelungen, bei denen ein Öffnen bzw. Entriegeln mittels Elektromotoren oder Elektromagneten während des Betriebs verhindert und/oder deren Notfallentriegelungseinheiten durch Elektromotoren oder Elektromagneten betätigt werden, weisen aufgrund der Verwendung von Elektromotoren bzw. Elektromagneten große Bauformen auf. Des weiteren ist es bei der Verwendung von Elektromotoren und Elektromagneten in Notfallentriegelungseinheiten für Türverriegelungen erforderlich, zusätzliche Einrichtungen bereitzustellen, die auch bei nicht normalen Betriebszuständen diesen Aktuatoren Energie liefern. Die Verwendung von Bimetallen und Dehnstoffelemente enthaltenden Aktuatoren haben den Nachteil, dass diese Aktuatoren relativ lange Ansprechzeiten aufweisen, d.h. diese Aktuatoren erzeugen erst nach einem Ablauf einer gewissen Zeitdauer die gewünschte Kräfte. Im Fall von Notfallentriegelungseinheiten mit Bimetallen bzw. Dehnstoffelemente enthaltenden Aktuatoren wird beispielsweise nach einem Stromausfall die entsprechende Türverriegelung nach Ablauf einer für die jeweiligen verwendeten Bimetalle bzw. Dehnstoffelemente enthaltenen Aktuatoren charakteristischen Zeitdauer wieder zum Öffnen freigegeben. Das kann beispielsweise dazu führen, dass nach einen Stromausfall eine Waschmaschine geöffnet werden kann, obwohl sich noch Wasser in dem Gerät noch befindet.

Eine weitere bei Haushaltsgeräten existierende Problematik besteht darin, dass Haushaltsgerätetüren während des Betriebes der Haushaltsgeräte fest verschlossen sein sollen, um beispielsweise das Entweichen von Wasser zu verhindern. Dem gegenüber sollen Haushaltsgerätetüren auf einfache Weise, d.h. mit möglichst geringem Kraftaufwand für deren Benutzer zu schließen und zu öffnen sein. Um diese sich entgegenstehenden Forderungen zu erfüllen, ist es bekannt, Türverriegelungen für Haushaltsgeräte mit Elektromotor- oder Elektromagnetanordnungen auszustatten, die beim Öffnen und Schließen den Gerätetürenbenutzer unterstützen, indem sie entsprechende Kräfte erzeugen. Bimetallanordnungen und Dehnstoffelemente enthaltende Aktuatoren sind hierfür nicht geeignet, da sie keine Kräfte entwickeln können, die ausreichend groß sind, um Benutzer beim Schließen und Öffnen von Haushaltsgerätetüren wirksam zu unterstützen. Auch hier ergeben sich aufgrund der Verwendungen von Elektromotoren bzw. Elektromagneten große Bauformen der Türverriegelungen.

US 5,685,148 offenbart eine Antriebseinheit zur Betätigung eines Ventils, wobei die Antriebseinheit einen schwenkbar gelagerten Hebel aufweist, der mittels eines Betätigungsdrahts aus einem Formgedächtnismetall mit Einwegeffekt schwenkbetätigbar ist. Der Betätigungsdraht ist in mehreren Windungen um eine ortsfeste Achse und einen als eines der Hebelenden dienenden Stab geschlungen.

DE 37 31146 A1 offenbart eine Antriebseinrichtung mit zwei axial in Reihe angeordneten, gegensinnig wirkenden Schraubenfedern aus einer Formgedächtnislegierung mit Einwegeffekt. Zwischen den beiden Schraubenfedern befindet sich ein Antriebsglied, das mit einer zu betätigenden Komponente verbindbar ist. Durch geeignete Bestromung der beiden Schraubenfedern kann das Antriebselement reversibel längs beider Achsrichtungen bewegt werden.

Auch in EP 1 045 141 A2 ist die Verwendung von Memory-Metall-Schraubenfedern zum bidirektionalen Stellen sowie zum Verriegeln einer Stellkomponente offenbart.

### Abriss der Erfindung

Aufgabe der Erfindung ist es, in einer Türverriegelung eines Haushaltsgeräts ausreichend große Kräfte für das Öffnen/Schließen oder/und das Verriegeln/Entriegeln erzeugen zu können, um die Tür beispielsweise vor einem unerwünschten Öffnen zu sichern (Sperren der Türverriegelung), die gesperrte Türverriegelung in normalen und in anormalen Betriebszuständen freizugeben oder Öffnungs-/Schließvorgänge oder/und Verriegelungs-/Entriegelungsvorgänge der Tür zu unterstützen. Dabei wird eine möglichst geringe Baugröße der Türverriegelung angestrebt.

Zur Lösung dieser Aufgabe ist gemäß Anspruch 1 die Verwendung eines Memory-Metall-Aktuators in einer Türverriegelung eines Haushaltsgeräts vorgesehen, wobei der Memory-Metall-Aktuator einen auf eine bewegliche Komponente der Türverriegelung einwirkenden, in seiner Längsrichtung zugaktivierbaren Memory-Metall-Draht zur Bewegung der Komponente umfasst, wobei die Komponente an einer Schaltkulisse geführt ist, welche zwei abwechselnd in Antwort auf eine Aktivierung des Memory-Metall-Drahts angefahrene Haltepositionen für die Komponente definiert.

Vorteilhafte Weiterbildungen der Erfindung sind in den abhängigen Unteransprüchen angegeben.

Die Verwendung von Memory-Metallen als Aktuatoren für Türverriegelungen von Haushaltsgerätetüren hat vielerlei Vorteile. Memory-Metalle können Kräfte erzeugen, die mit denen von Elektromotoren- und Elektromagnetanordnungen vergleichbar sind, weisen dabei aber Bauformen auf, die deutlich kleiner als die von Bimetallaktuatoren sind. So kann beispielsweise ein als Aktuator verwendeter Draht aus Memory-Metall des Typs Nitinol (gebräuchlicher, nicht geschützter Name für Memory-Metalle aus NiTi-Ligierungen) mit einem Durchmesser von etwa 4 mm Kräfte von bis zu 100 Newton erzeugen, d.h. es kann eine Last von bis zu einer Tonne bewegt werden.

Als weiterer Vorteil im Vergleich mit Bimetallaktuatoren, deren aktivierbare Bewegung lediglich auf Biegeverformungen beschränkt ist, und mit Dehnstoffelementen enthaltenden Aktuatoren, die nur transversal wirkende Kräfte erzeugen können, können Memory-Metall-Aktuatoren beliebige Bewegungen zum Erzeugen von Kräften ausführen. Dementsprechend ist es bei der erfindungsgemäßen Vorgehensweise nicht mehr erforderlich, Türverriegelungen für Haushaltsgeräte in Abhängigkeit vorgesehener Aktuatoren aufzubauen. Vielmehr können die Memory-Metall-Aktuatoren in Abhängigkeit eines gewünschten oder vorgegebenen Aufbaus einer Türverriegelung ausgelegt werden, wodurch es weiter ermöglicht wird, bei schon vorhanden Türverriegelungen Memory-Metall-Aktuatoren zu integrieren.

Grundsätzlich unterscheidet man bei Memory-Metallen zwischen sogenannten Einweg-Memory-Metallen und Zweiweg-Memory-Metallen. Einweg-Memory-Metalle nehmen - unabhängig von ihrer Form in einem Temperaturbereich unterhalb einer Schwelltemperatur - eine vorgegebene Form ein, wenn die Schwelltemperatur überschritten wird, wobei Kräfte erzeugt werden. Dieser Vorgang ist wiederholbar, indem Einweg-Memory-Metalle durch äußere Kräfte aus der vorgegebenen Form gebracht und dann über die Schwelltemperatur erwärmt werden. Zweiweg-Memory-Metalle weisen zwei vorgegebene Formen auf, die sie beim Unterschreiten einer unteren bzw. beim Überschreiten einer oberen Schwelltemperatur einnehmen. Für Übergänge zwischen den zwei vorgegebenen Formen ist es hierbei nicht erforderlich, dass äußere Kräfte auf Zweiweg-Memory-Metalle erwirken. Vielmehr reicht es aus, Zweiweg-Memory-Metalle über die obere Schwelltemperatur zu erwärmen bzw. unter die untere Schwelltemperatur abzukühlen, um deren unterschiedliche Formen zu erhalten. Dementsprechend ist es bei Verwendung von Zweiweg-Memory-Metallen möglich, sowohl Kräfte beim Überschreiten der oberen Schwelltemperatur als auch beim Unterschreiten der unteren Schwelltemperatur zu erzeugen, wohingegen bei Einweg-Memory-Metallen Kräfte lediglich beim Überschreiten der entsprechenden Schwelltemperatur erzeugt werden.

Diese Eigenschaften von Memory-Metallen erlauben es, erfindungsgemäße Memory-Metall-Aktuatoren sowohl bei Türverriegelungen, die herkömmlicherweise Bimetallaktuatoren oder Dehnstoffelemente enthaltende Aktuatoren (d.h. Aktuatoren die Kräfte in eine Richtung erzeugen) umfassen, als auch bei Türverriegelungen zu verwenden, die bisher Elektromotor- oder Elektromagnetanordnungen (d.h. Einrichtungen, die Kräfte in entgegengesetzte Richtungen erzeugen können) umfassen. Darüber hinaus erlauben es Zweiweg-Memory-Metalle, im Gegensatz zu Elektromotor- und Elektromagnetanordnungen, Kräfte in Richtungen zu erzeugen, die nicht nur in entgegengesetzter Richtung wirken, sondern in einem beliebigen Verhältnis zueinander stehen können. So ist es beispielsweise möglich, mittels eines Zweiweg-Memory-Metall-Aktuators eine erste in einer ersten Richtung wirkende Kraft und eine zweite in einer zweiten Richtung wirkende Kraft zu erzeugen, wobei die ersten und zweiten Richtungen relativ zueinander beliebig gewählt werden können.

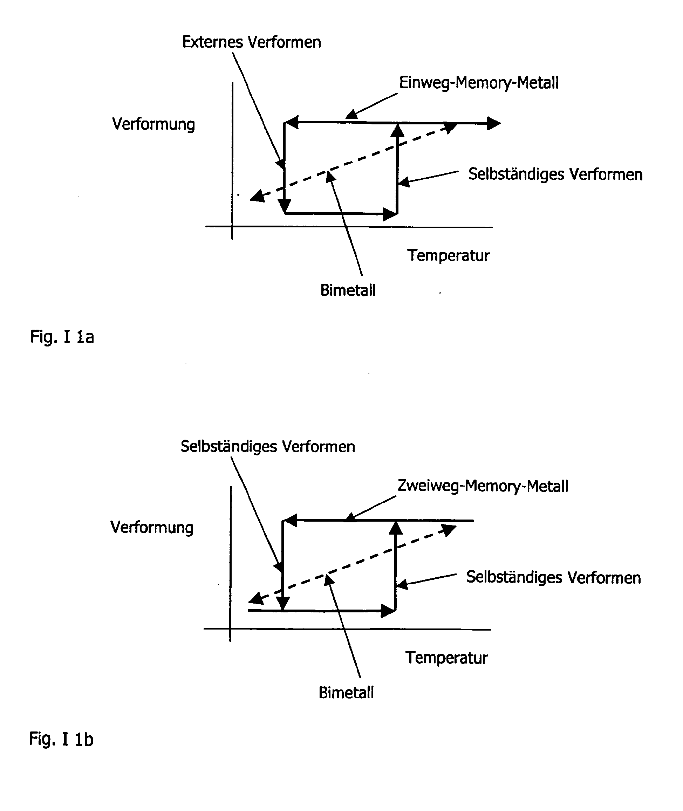

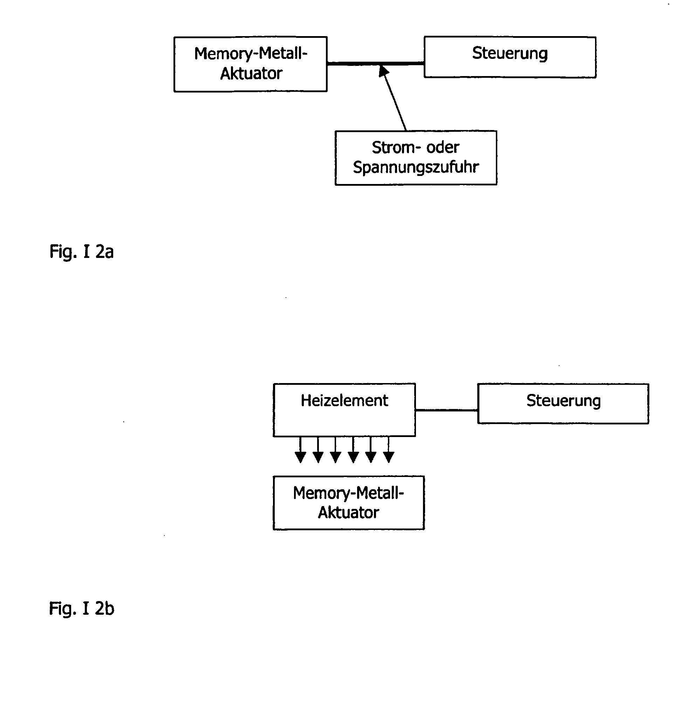

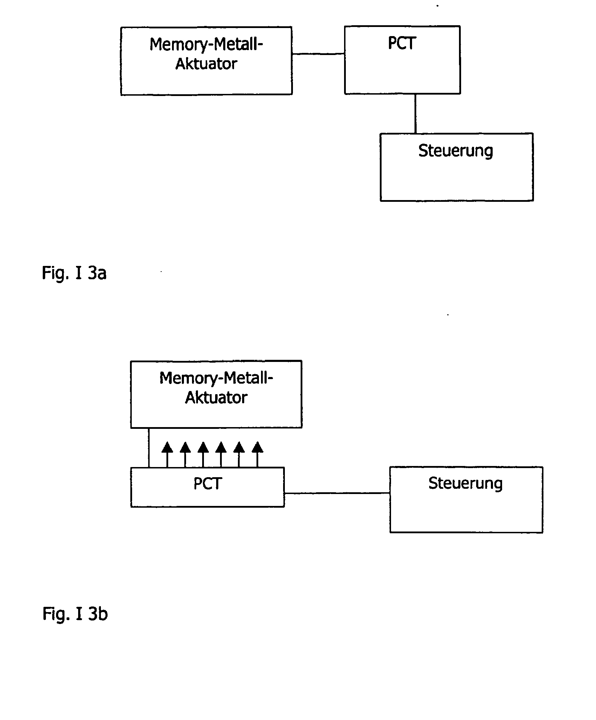

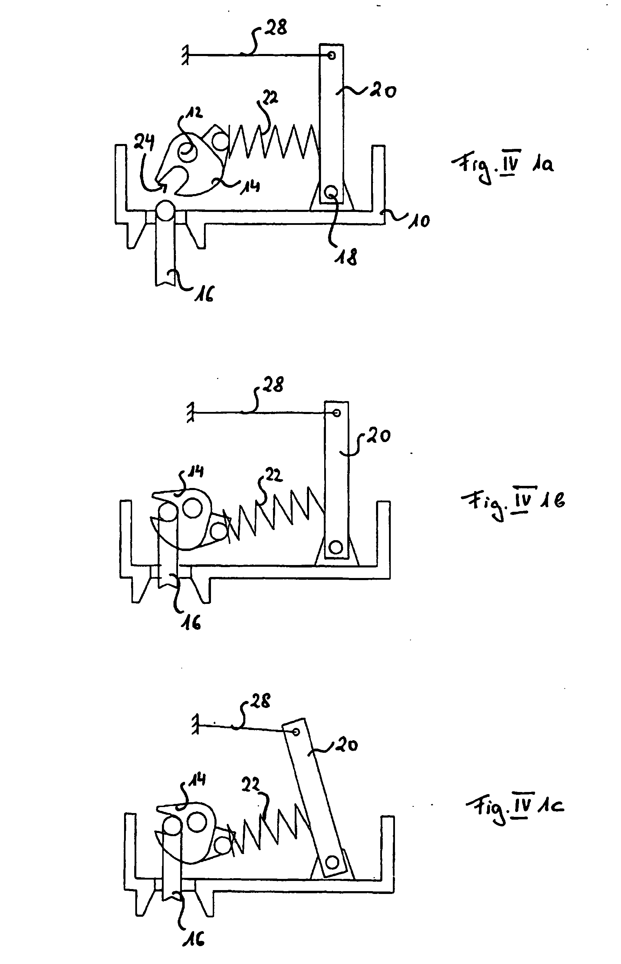

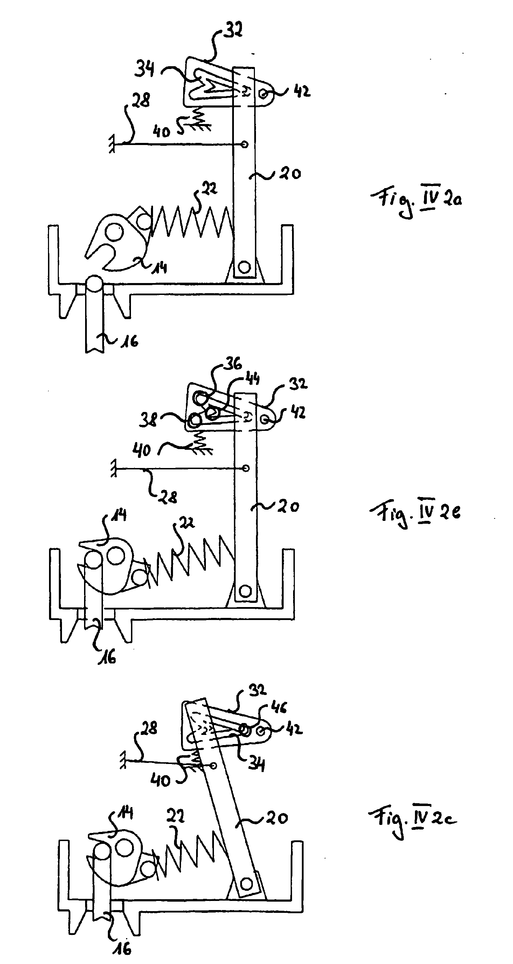

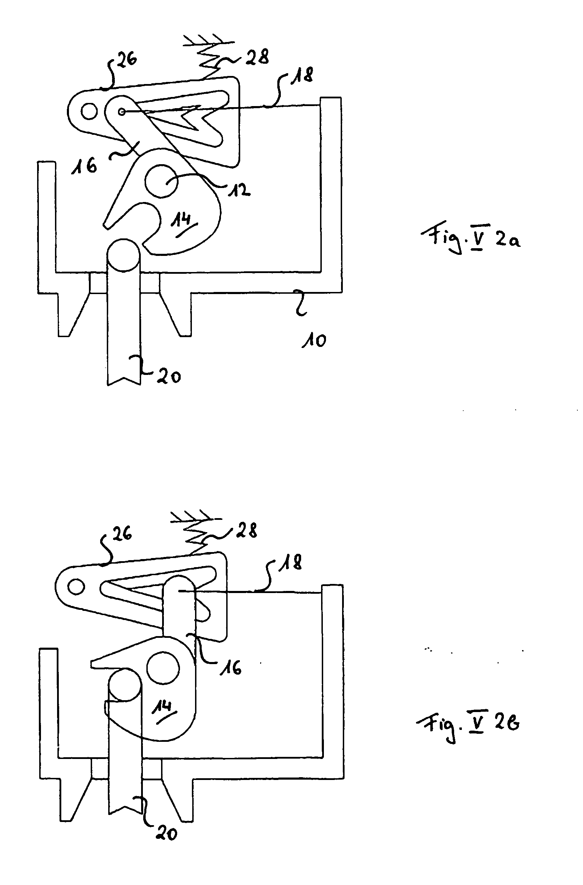

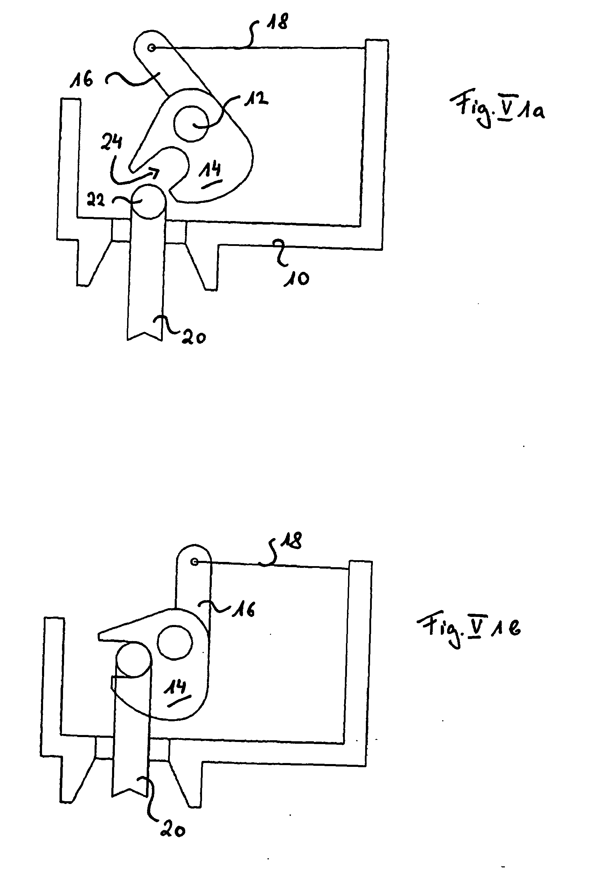

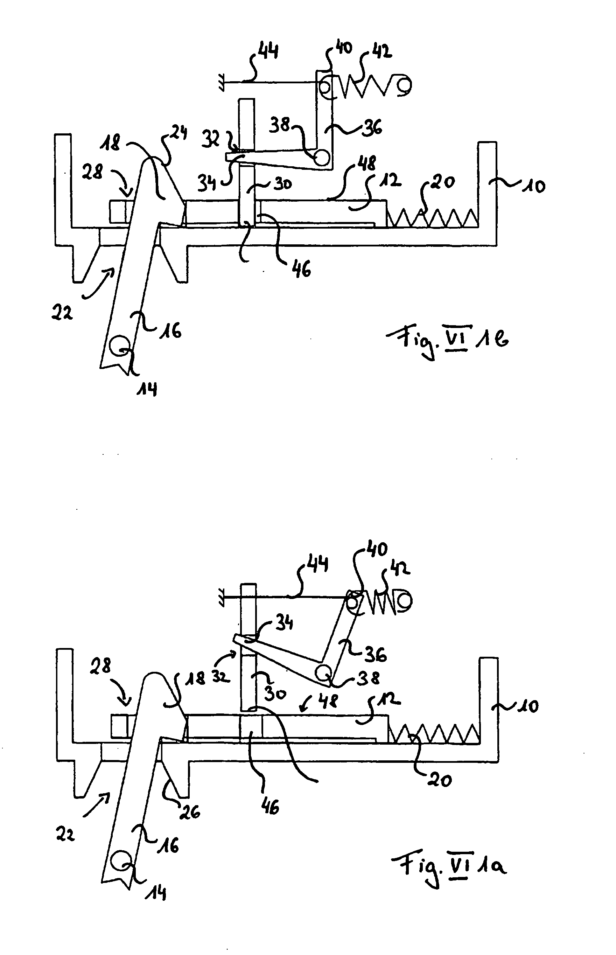

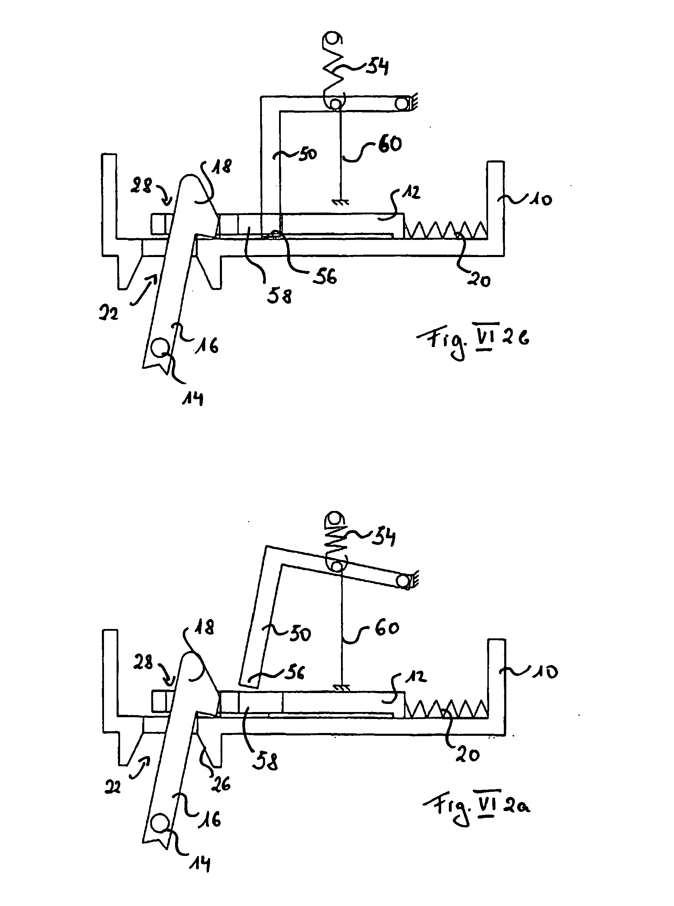

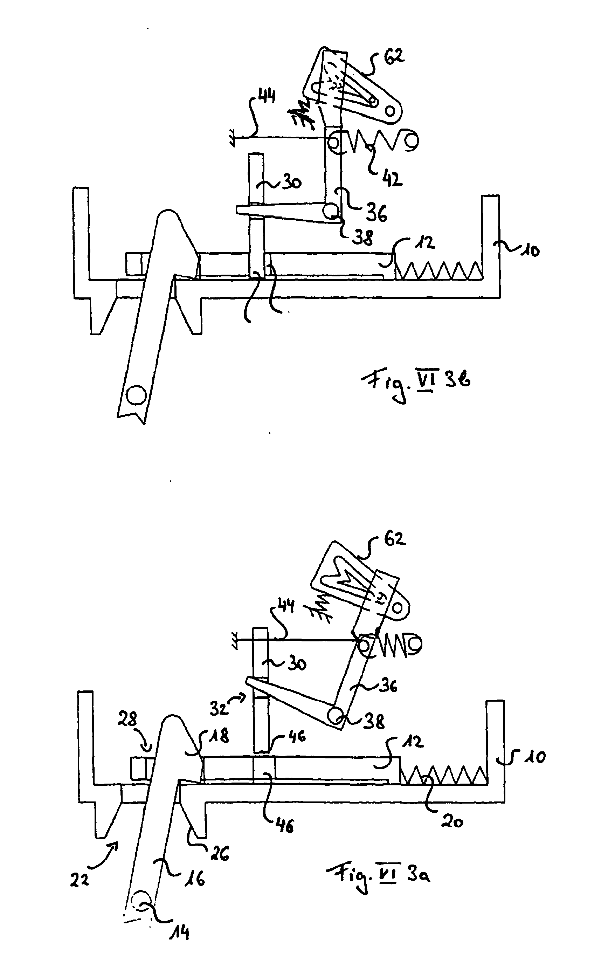

Ein weiterer Vorteil der erfindungsgemäßen Memory-Metall-Aktuatoren gegenüber herkömmlichen Bimetallaktuatoren besteht darin, dass die Memory-Metall-Aktuatoren eine Hysterese aufweisen, weshalb die von Memory-Metall-Aktuatoren erzeugten Kräfte nahezu sprungartig erzeugt werden. Im Gegensatz dazu erzeugen Bimetallaktuatoren Kräfte, die im Wesentlichen einer linearen Funktion folgen. Wie im Fig. 1a und 1b veranschaulicht, gilt dies sowohl für Einweg- als auch Zweiweg-Memory-Metalle.

Wie oben ausgeführt, kann der Memory-Metall-Aktuator dazu dienen, die Türverriegelung zu sperren, wenn sie sich in einem verriegelten Zustand befindet, d.h. so mit der Türverriegelung zusammen zu wirken, dass diese auch durch einen Benutzer des Haushaltsgerätes nicht aus ihrem verriegelten Zustand gebracht werden kann.

Ferner kann der Memory-Metall-Aktuator dazu dienen, die Türverriegelung aus ihrem verriegelten Zustand, in dem sie eine Gerätetür des Haushaltsgerätes geschlossen hält, in einen entriegelten Zustand zu bringen, indem die Gerätetür nicht mehr verriegelt und noch nicht geöffnet ist, aber ein Öffnen der Gerätetür möglich ist.

Um das Öffnen einer Gerätetür eines Haushaltesgerätes besonders bedienungsfreundlich zu gestalten, ist es vorgesehen, dass der Memory-Metall-Aktuator so ausgelegt und angeordnet ist, dass er, beispielsweise nach Beendigung eines Betriebszyklusses des Haushaltsgerätes, die Türverriegelung in einen geöffneten Zustand bringt, in dem die Gerätetür nicht nur entriegelt, sondern auch wenigstens teilweise geöffnet ist ("Aufspringen der Gerätetür").

Vergleichbar dazu kann der Schließvorgang einer Gerätetür eines Haushaltsgerätes unterstützt werden, indem der Memory-Metall-Aktuator, beispielsweise vor einer eigentlichen Inbetriebnahme eines Haushaltsgerätes, Kräfte erzeugt, die die Türverriegelung aus einer geöffneten Stellung zumindest in ihrer Freigabestellung bringt, in der die Haushaltsgerätetür zwar schon geschlossen, aber noch nicht verriegelt ist. Vorzugsweise erzeugt der Memory-Metall-Aktuator beim Schließen einer Haushaltsgerätetür Kräfte, die geeignet sind, um die Türverriegelung aus ihrer Offenstellung in ihren verriegelten Zustand zu bringen, in dem die Haushaltsgerätetür geschlossen und verriegelt ist. Dies kann auch verwendet werden, um eine Haushaltsgerätetür in ihrem geschlossenen Zustand zu halten, indem beispielsweise mittels eines Memory-Metall-Aktuators für eine Anpresskraft zwischen der Gerätetür und einem Anschlag (z.B. Dichtungselemente) gesorgt wird oder die von anderen mit der Haushaltsgerätetür zusammenwirkenden Komponenten (z.B. Federn) erzeugte Anpresskraft erhöht wird.

Je nach der Art der gewünschten, von dem Memory-Metall-Aktuator zu erzeugenden Kräften, kann ein Einweg- oder Zweiweg-Memory-Metall-Aktuator verwendet werden. Bei Verwendung eines Einweg- Memory-Metall-Aktuator ist es vorgesehen, dass dieser mit einer Rückstelleinheit der Türverriegelung zusammen wirkt, die Kräfte erzeugen kann, die in einer der Richtung der von dem Memory-Metall-Aktuator erzeugten Kräfte entgegengesetzten Richtung wirken. Beispiele für solche Rückstelleinheiten umfassen elastische Aktuatoren, Federn, bistabile Elemente, hydraulisch und pneumatische Komponenten und dergleichen.

Zur Aktivierung des Memory-Metall-Aktuators kann die Einheit eine Einrichtung aufweisen, um, vorteilhafter Weise in Abhängigkeit von Betriebszuständen der Türverriegelung bzw. des Haushaltsgerätes, den Aktuator über die im Fall eines Einweg-Memory-Metalls vorgegebene eine Schwelltemperatur oder im Fall eines Zweiweg- Memory-Metall über die obere Schwelltemperatur zu erwärmen. Alternativ oder ergänzend dazu ist es vorgesehen, dass die erfindungsgemäße Einheit so ausgelegt ist, dass für die Erwärmung über die eine Schwelltemperatur (Einweg-Memory-Metall) oder über die obere Schwelltemperatur (Zweiweg-Memory-Metall) Temperaturänderungen genutzt werden können, die beim Betrieb des Haushaltsgerätes auftreten. Beispiele hierfür sind Waschmaschinen, bei der eine Erwärmung des Waschwassers auch dazu genutzt wird, den Memory-Metall-Aktuator zu erwärmen. Beispiele für eine baueinheitlich in die erfindungsgemäße Einheit integrierte Erwärmung sind PTC-Elemente, Heizungen (vorzugsweise miniaturisierte Heizelemente) und ein, vorzugsweise gesteuerter, Stromfluss durch den Memory-Metall-Aktuator.

Des weiteren ist es vorgesehen, dass die zur Erwärmung des Memory-Metall-Aktuators erforderlichen Vorgänge impulsartig oder andauernd ablaufen, um mittels des Memory-Metall-Aktuators impulsartige, für kurze Zeiträume andauernde Kräfte oder über einen längeren Zeitraum wirkende Kräfte zu erzeugen. Vorzugsweise werden für diese Betriebsarten der erfindungsgemäßen Einheit in diese baueinheitliche integrierte Steuereinheiten oder eine dafür ausgelegte Steuereinheit der Türverriegelung verwendet.

Insbesondere sind die im Folgenden beschriebenen Varianten zur Ansteuerung der erfindungsgemäßen Einheit vorgesehen. Um einen Memory-Metall-Aktuator der erfindungsgemäßen Einheit so zu erwärmen, dass dieser eine vorgegeben Form einnimmt und in diesem (erwärmten) Zustand gehalten wird, kann der Memory-Metall-Aktuator direkt mit einem Strom, vorzugsweise gleichmäßig und kontinuierlich, angesteuert werden. Alternativ oder ergänzend dazu kann der Memory-Metall-Aktuator indirekt andauernd angesteuert werden, indem beispielsweise mittels eines thermisch gekoppelten PTC-Elements der Memory-Metall-Aktuator erwärmt und erwärmt gehalten wird.

Für eine impulsartige Ansteuerung kann ein Strom mit geeignetem impulsförmigen Verlauf verwendet werden. Vorzugsweise wird ein impulsartiger Steuerstrom für den Memory-Metall-Aktuator erzeugt, indem dieser mit einem PTC-Element in Reihe geschaltet ist. Aufgrund der Eigenschaften von PTC-Elementen kann auf diese Weise ohne eine aufwendige Steuerung ein impulsartiger Ansteuerstrom erzeugt werden. Wenn PTC-Elemente mit Energie versorgt werden, beispielsweise mittels einer Spannungs- oder Stromversorgung, sind sie anfangs kurzzeitig sehr niederohmig und gehen danach nahezu sprungartig in einen sehr hochohmigen Zustand über. Diese Eigenschaft erlaubt es, PTC-Elemente, vergleichbar zu einer gesteuerten Energieversorgung oder einem Schalter, zur impulsartigen Ansteuerung eines Memory-Metall-Aktuators der erfindungsgemäßen Einheit zu verwenden. Ein Vorteil einer impulsartigen Ansteuerung ist, dass sie zu einer schnellen Aktivierung eines Memory-Metall-Aktuators und somit zu kurzen Aktivierungs- bzw. Ansprechzeiten der erfindungsgemäßen Einheit führt.

Um einen anfänglich impulsartig angesteuerten Memory-Metall-Aktuator der erfindungsgemäßen Einheit in einem Zustand zu halten, in dem er seine vorgegebene Form beibehält, ist es vorgesehen, den Memory-Metall-Aktuator nach einer Aktivierung erwärmt zu halten. Bei Verwendung einer gesteuerten Stromversorgung kann dies erreicht werden, indem der Memory-Metall-Aktuator nach einer impulsartigen Ansteuerung mit einem im Wesentlichen konstanten Strom, wie oben beschrieben, direkt angesteuert bzw. erwärmt wird. Bei Verwendung eines PTC-Elements zur impulsartigen Aktivierung eines Memory-Metall-Aktuator der erfindungsgemäßen Einheit ist es vorgesehen, das PTC-Element auch, wie oben beschrieben, zur Erwärmung des Memory-Metall-Aktuators mittels thermischer Koppelung zu verwenden. Auch bei einer impulsartigen Ansteuerung mittels eines PTC-Elements kann nach einer impulsartigen Aktivierung eines Memory-Metall-Aktuators der erfindungsgemäßen Einheit die Erwärmung mittels einer gesteuerten, im Wesentlichen konstanten Stromzufuhr zu dem Memory-Metall-Aktuator erfolgen.

Des Weiteren ist es vorgesehen, dass ein Memory-Metall-Aktuator der erfindungsgemäßen Einheit mit einer Einrichtung zusammenwirkt, die nach einer Aktivierung des Memory-Metall-Aktuators den durch diesen bewirkten Zustand beibehält. Beispiele für eine solche Einrichtung sind Kulissenschaltungen, lösbare Rast- und/oder Schnappverbindungen und dergleichen. Die Verwendung solcher Einrichtungen hat den Vorteil, dass nach einer Aktivierung eines Memory-Metall-Aktuators der erfindungsgemäßen Einheit ein durch diesen bewirkter Zustand (beispielsweise ein Ver- oder Entriegeln einer Türverriegelung) im Wesentlichen unabhängig davon aufrecht erhalten werden kann, ob der Memory-Metall-Aktuator aktiviert (erwärmt) bleibt. Wird beispielsweise ein impulsartig angesteuerter Memory-Metall-Aktuator bei der erfindungsgemäßen Einheit verwendet, ist es somit nach einer durch eine impulsartige Ansteuerung des Memory-Metall-Aktuators bewirkten Zustandsänderung der erfindungsgemäßen Einheit nicht mehr erforderlich, den Memory-Metall-Aktuator weiter zu erwärmen.

Des Weiteren erlaubt es diese Vorgehensweise, mittels eines Einweg-Memory-Metall-Aktuators Übergänge zwischen verschiedenen Betriebszuständen der erfindungsgemäßen Einheit zu realisieren, für die ansonsten Zweiweg-Memory-Metall-Aktuatoren oder ein weiterer Einweg-Memory-Metall-Aktuator erforderlich wären. So kann beispielsweise mittels einer Kulissenschaltung, die mit einem Einweg-Memory-Metall-Aktuator zusammenwirkt, eine Türverriegelung mittels einer impulsartigen Ansteuerung der erfindungsgemäßen Einheit verund entriegelt werden. Zum Beispiel kann ein erster Impuls zur Aktivierung des Einweg-Memory-Metall-Aktuators die erfindungsgemäße Einheit in einen Betriebszustand bringen, in dem sie eine Türverriegelung eines Haushaltsgerätes verriegeln kann. Mittels einer Kulissenschaltung wird dann dieser Betriebszustand so lange beibehalten, bis mittels eines zweiten Impulses der Einweg-Memory-Metall-Aktuator erneut betätigt wird, um die erfindungsgemäße Einheit in einen Betriebszustand zum Entriegeln der Türverriegelung zu bringen. Dieser Entriegelungszustand kann dann wieder von der Kulissenschaltung beibehalten werden.

### Kurzbeschreibung der Zeichnungen

In der folgenden Beschreibung verschiedener Ausführungsformen (erfindungsgemäße wie auch Vergleichs- beispiele) wird auf die beigefügten Fig. Bezug genommen, von denen zeigen:
- Fig. I 1a und I 1b: schematische Darstellungen der Veränderungen von Einweg- und Zweiweg-Memory-Metallen in Abhängigkeit von der Temperatur im Vergleich mit der temperaturabhängigen Veränderungen von Bimetallen,
- Fig. I 2a und I 2b: schematische Darstellungen von Anordnungen zum Betrieb erfindungsgemäßer Einheiten,
- Fig. I 3a und I 3b: schematische Darstellungen weiterer Anordnungen zum Betrieb erfindungsgemäßer Einheiten,
- Fig. IV 1a bis IV 1c: schematische Darstellungen einer 4. Ausführungsform mit einem dauerhaft anzusteuernden Memory-Metall-Aktuator,
- Fig. IV 2a bis IV 2c: schematische Darstellungen einer 5. Ausführungsform mit einem impulsartig anzusteuernden Memory-Metall-Aktuator und einer mit diesem zusammenwirkenden Kulissenschaltung,
- Fig. V 1a und V 1b: schematische Darstellungen einer 6. Ausführungsform zum aktiven Schließen einer Haushaltsgerätetür mit einem dauerhaft anzusteuernden Memory-Metall-Aktuator,
- Fig. V 2a und V 2b: schematische Darstellungen einer 7. Ausführungsform zum aktiven Zuziehen einer Haushaltsgerätetür mit einem impulsartig anzusteuernden Memory-Metall-Aktuator und einer mit diesem zusammenwirkenden Kulissenschaltung,
- Fig. VI 1a und VI 1b: schematische Darstellungen einer 8. Ausführungsform
- Fig. VI 2a und VI 2b: schematische Darstellungen einer Modifikation der 8. Ausführungsform,
- Fig: VI 3a und VI 3b: schematische Darstellungen einer weiteren Modifikation der 8. Ausführungsform mit einem impulsartig anzusteuernden Memory-Metall-Aktuator und einer mit diesem zusammenwirkenden Kulissenschaltung.

### Beschreibung der Ausführungsformen

### Allgemeine Anmerkungen

Die Beschreibung der Ausführungsformen ist in mit römischen Zahlen bezeichnete Abschnitte unterteilt, wobei die den verschiedenen Abschnitten zugeordneten FIG. mit den entsprechenden römischen Nummern gefolgt von einer durchlaufenden Nummerierung in römischen Zahlen versehen sind. Des weiteren sind die in den einzelnen Abschnitten vergebenen Bezugszeichen unabhängig voneinander vergeben worden.

### Ausführungsformen - Teil I

Bei den Einheiten, die eingangs als Türverriegelungen definiert sind, werden Memory-Metall-Aktuatoren verwendet, wobei unter einem Memory-Metall-Aktuator eine Einheit verstanden wird, die mittels eines Memory-Metalls, genauer dessen temperaturabhängigen Formänderungen, Kräfte erzeugt. Dementsprechend umfassen Memory-Metall-Aktuatoren hier einzelne, mehrere oder gebündelte Memory-Metall-Drähte, Memory-Metall-Komponenten in Form von Biegebalken, Körpern und dergleichen.

Des weiteren wird im Folgenden unter einem Aktivieren eines Memory-Metall-Aktuators verstanden, dass der Memory-Metall-Aktuator so erwärmt wird, dass im Fall eines Einweg-Memory-Metall-Aktuators dessen Schwelltemperatur und im Fall eines Zweiweg-Memory-Metall-Aktuators dessen obere Schwelltemperatur überschritten wird, wobei dabei auftretende Formänderungen bzw. damit verbundene Kräfte genutzt werden.

Um bei einer Aktivierung von Memory-Metall-Aktuatoren zumindest das Memory-Metall selbst zu erwärmen, kann das Memory-Metall unmittelbar mit einer Strom- oder Spannungsquelle verbunden werden. Zur Aktivierung wird hierbei eine Steuerung für die Strom- oder Spannungsquelle verwendet, um eine gewünschte Erwärmung des Memory-Metalls ohne Beschädigung desselben zu erzeugen. Diese Anordnung ist schematisch in Fig. I 2a dargestellt.

Wie in Fig. I 2b zusehen, kann eine Aktivierung eines Memory-Metall-Aktuators auch mittels eines thermischen Elementes (PTC-Element) erreicht werden, das mit dem Memory-Metall-Aktuator thermisch gehoppelt ist und in Abhängigkeit der Art der von dem Memory-Metall-Aktuator zu erzeugende Kräfte gesteuert wird. Bei einer nichtdargestellten Ausführungsform wird ein thermisches Element zum Aktivieren eines Memory-Metall-Aktuators verwendet, das für dessen Erwärmung sorgt, sobald das Haushaltsgerät in Betrieb genommen wird. Diese kann beispielsweise dadurch erreicht werden, dass das thermische Element mit der Energieversorgung des Haushaltsgerätes gekoppelt ist bzw. dieser versorgt wird.

Des Weiteren ist es möglich, zum Aktivieren von Memory-Metall-Aktuatoren Wärme zu verwenden, die beim Betrieb eines Haushaltsgerätes ohnehin entsteht. Beispiele hierfür sind die von Heizelementen einer Wasch- oder Spülmaschine erzeugte Wärmestrahlungen, beim Betrieb eines Küchenherdes entstehende Wärme, beim Betrieb eines Haushaltsgerätes durch bewegliche Teile desselben erzeugte Wärme und dergleichen. Im Falle eines Mikrowellen - Haushaltsgerätes ist es ferner möglich, einen Memory-Metall-Aktuator so mit einem Material zu koppeln, das von der verwendeten Mikrowellenstrahlung erwärmt werden kann, um beim Betrieb, d.h. beim Erzeugen von Mikrowellen, eine Aktivierung des Memory-Metall-Aktuators zu bewirken.

Eine besondere bevorzugte Ausführungsform zum Aktivieren des eines Memory-Metall-Aktuators ist eine in Fig. I 3a gezeigte Anordnung, bei der der Memory-Metall-Aktuator mit einem PTC-Element in Reihe geschaltet mit Energie versorgt wird. Hierbei wird der Umstand genutzt, dass PTC-Elemente, wenn sie zum Aktivieren/Enwärmen mit einer Spannungsversorgung verbunden werden, beim Einschalten der Spannungsversorgung kurzzeitig sehr niederohmig sind und danach nahezu sprungartig in einen sehr hochohmigen Zustand übergehen. Dementsprechend ergibt sich ein Stromverlauf, der anfänglich einen kurzen impulsartigen hohen Strom gefolgt von einem im Wesentlichen konstanten niedrigen Strom umfasst. Dies führt bei einer Reihenschaltung eines PCT-Elementes und des Memory-Metall-Aktuators dazu, dass der Memory-Metall-Aktuator durch den impulsartigen Strom kurzzeitig aktiviert und somit impulsartige Kräfte erzeugt werden.

Durch eine geeignete Wahl des PCT-Elementes und dessen Spannungsversorgung kann es erreicht werden, dass der nach dem anfänglichen Stromimpuls fließende Strom so klein ist, dass er für eine Aktivierung des Memory-Metall-Aktuators nicht mehr ausreicht. Dementsprechend kann sich der Memory-Metall-Aktuator nach der Aktivierung durch den Stromimpuls abkühlen, d.h. der Memory-Metall-Aktuator wird deaktiviert. Bei diesem Ansatz arbeitet das mit dem Memory-Metall-Aktuator im Reihe geschaltete PTC-Element wie ein Schalter, wodurch eine üblicherweise erforderliche aufwendige Steuerung zur Erzeugung impulsartiger Ströme vermieden wird.

Zusätzlich ist es möglich, das mit dem Memory-Metall-Aktuator im Reihe geschaltete PTC-Element so anzuordnen, dass dieses mit dem Memory-Metall-Aktuator auch thermisch gekoppelt ist. Diese in Fig. I 3b veranschaulichte Vorgehensweise ermöglicht es, nach einer durch den anfänglichen Stromimpuls bewirktem Aktivierung des Memory-Metall-Aktuators diesen aktiviert, d.h. warm genug zu halten, dass er die für seine Aktivierung (d.h. Überschreiten der Schwelltemperatur) vorgegebene Form beibehält bzw. die damit verbundenen Kräfte aufrechterhält. Wie oben erläutert, kann die Erwärmung des Memory-Metall-Aktuators nach einer impulsartigen Aktivierung durch eine direkte Ansteuerung mit einem geeigneten gesteuerten Strom aufrecht erhalten werden.

Ferner ist es möglich, wie eingangs ausgeführt, einen nach einer impulsartigen Aktivierung des Memory-Metall-Aktuators eingenommenen Betriebszustand beizubehalten, indem beispielsweise ein PCT-Element oder eine Kulissenschaltung mit dem Memory-Metall-Aktuator zusammenwirkt.

Alternativ dazu kann eine thermische Koppelung des PTC-Elements mit dem Memory-Metall-Aktuator auch so ausgelegt sein, dass die Zeitdauer bis zu einer Deaktivierung des Memory-Metall-Aktuators auf einen gewünschten bzw. einen vorgegebenen Wert eingestellt wird. Hierfür wird die von dem PCT-Element dem Memory-Metall-Aktuator zugeführte Wärme so gewählt, dass dessen Abkühlvorgang so verlangsamt wird, dass die Deaktivierung (Rückstellung, Rückformung) des Memory-Metall-Aktuators erst nach einer gewünsehten bzw. vorgegebenen Zeitdauer erfolgt.

In beiden Fällen sorgt die thermische Koppelung des PCT-Elementes mit dem Memory-Metall-Aktuator auch für eine erhöhte Sicherheit. Wenn in einem nicht normalen Betriebszustand, beispielsweise bei einem Stromausfall, das PTC-Element nicht mehr mit Energie versorgt wird, d.h. nicht mehr erwärmt wird, sorgt die beim Abkühlvorgang des PTC-Elementes an den Memory-Metall-Aktuator abgegebene Wärme dazu, dass dessen Deaktivierung verlangsamt wird. Auf diese Weise ist es beispielsweise möglich, dass bei einem fehlerhaften Betrieb eines Haushaltsgerätes dessen Türverriegelung erst nach Ablauf einer Zeitdauer zum Entriegeln freigegeben wird, die durch die Abkühlvorgänge des PTC-Elements und des Memory-Metall-Aktuators einstellbar ist.

Zum Deaktivieren eines Memory-Metall-Aktuators wird im Fall eines Einweg-Memory-Metall-Aktuators dieser so betrieben, dass dessen Temperatur die entsprechende Schwelltemperatur unterschreitet, wonach ein Einweg-Memory-Metall-Aktuator durch äußere Kräfte (z.B. Federkräfte) beliebig verformt werden kann. Bei einem Zweiweg-Memory-Metall-Aktuator wird unter einer Deaktivierung ein Betrieb des Aktuators verstanden, bei dem der Zweiweg-Memory-Metall-Aktuator auf eine Temperatur unterhalb der entsprechenden unteren Schwelltemperatur gebracht wird.

In allen Fällen ist für eine Deaktivierung der Memory-Metall-Aktuator abzukühlen. In Abhängigkeit beispielsweise von den thermischen Eigenschaften verwendeter Memory-Metalle und einer zur Deaktivierung vorgegebenen und/oder gewünschten Zeitdauer kann im einfachsten Fall eine Deaktivierung dadurch erfolgen, dass der Memory-Metall-Aktuator von alleine auskühlt. Zur Beschleunigung einer Deaktivierung können auch aktive Elemente, z.B. Ventilatoren oder andere kühlende Komponenten, verwendet werden. Falls in dem betreffenden Haushaltsgerät schon kühlende Einrichtungen vorhanden sind oder kühlende Betriebszustände vorgesehen sind, ist es vorteilhaft, diese auch zum Abkühlen der Memory-Metall-Aktuatoren zu verwenden. Ein Beispiel hierfür sind Wäschetrockner, die im Allgemeinen nach Ablauf eines Trockenprogramms Luft zum Kühlen von Wäsche verwenden, um ein Verknittern der Wäsche zu verhindern. Diese Kühlluft kann dann auch verwendet werden, um, falls gewünscht, Memory-Metall-Aktuatoren zu aktivieren.

### Ausführungsformen - Teil IV

Die in Fig. IV 1a bis IV 1c dargestellte Türverriegelung umfasst ein Gehäuse 10, eine um eine Achse 12 drehbar gelagerte Drehfalle 14 und einen an einer nicht dargestellten Haushaltsgerätetür angebrachten Schließkloben 16. Zwischen der Drehfalle 14 und einem um eine Achse 18 drehbar angeordneten Hebel 20 ist eine Druckfeder 22 angeordnet. Die Druckfeder 22 ist so mit der Drehfalle 14 verbunden, dass die Druckfeder 22 die Drehfalle in der in Fig. IV 1a gezeigten Stellung hält und bei einer Drehung der Drehfalle 14 im Urzeigersinn in die in Fig. IV 1b gezeigte Stellung gebracht wird. Bei einer solchen Drehung der Drehfalle 14 wird ein Schnapppunkt für die Druckfeder 22 überwunden, so dass die Druckfeder. 22 in die in Fig. IV 1b gezeigte Stellung springt und die Drehfalle 14 in der in Fig. IV 1b gezeigten Stellung hält. Entsprechendes gilt für Drehung der Drehfalle 14 gegen den Uhrzeigersinn. Vorteilhafterweise sind die von der Druckfeder 22 in den zwei Stellungen erzeugten Kräfte und die zur Überwindung des Schnapppunktes erforderlichen Kräfte so dimensioniert, dass die Drehfalle 14 beim Schließen und Öffnen der Haushaltsgerätetür leicht bewegt werden kann.

Zum Schließen der Haushaltsgerätetür wird der Schließkloben 16 in Wirkverbindung mit einer in der Drehfalle 14 ausgebildeten Ausnehmung 24 gebracht und die Drehfalle 14 im Uhrzeigersinn gedreht. Nach Überwindung des Schnapppunktes unterstützen die von der Druckfeder 22 aufgebrachten Kräfte den Schließvorgang wenigstens teilweise. Nach Beendigung des Schließvorganges bewirken die Kräfte, die von der Druckfeder 22 in der in Fig. IV 1b dargestellten Stellung erzeugt werden, dass die Haushaltsgerätetür mit einer vorgegebenen Kraft geschlossen gehalten wird. Diese auch als Anpresskraft bezeichnete Kraft ist, wie oben ausgeführt, vorteilhafterweise so dimensioniert, dass die Haushaltsgerätetür ohne hohen Kraftaufwand für den Benutzer geöffnet werden kann.

Um bei einem Betrieb des Haushaltsgeräts dessen Tür sicher geschlossen zu halten, wird die durch die Druckfeder 22 erzeugte Anpresskraft erhöht, indem der Hebel 20 in die in Fig. IV 1c gebrachte Stellung bewegt wird. Hierfür wird ein Einweg-Memory-Metall-Aktuator 26 aktiviert, der an einem Ende 30 des Hebels 20 angreift und diesen nach einer Aktivierung nach links bewegt. Dadurch wird die Druckfeder 22 komprimiert und die durch diese erzeugte Anpresskraft erhöht. Dieser Zustand wird durch eine der Eingangs erläuterten Ansteuerungsarten des Memory-Metall-Aktuators 28 beibehalten. Hierbei ist es vorgesehen, dass die so erhöhte Anpresskraft so groß ist, dass während eines Betriebszustandes des Haushaltsgerätes, in dem die Haushaltsgerätetür nicht geöffnet werden soll, ein Öffnen der Haushaltsgerätetür verhindert wird oder nur mit (deutlich spürbar) erhöhtem Kraftaufwand möglich ist.

Für Betriebszustände des Haushaltsgerätes, in denen die Haushaltsgerätetür geöffnet werden darf, wird der Memory-Metall-Aktuator 28 deaktiviert und die Druckfeder 22 bewegt den Hebel 20 in die in Fig. IV 1b gezeigte Stellung zurück. Die so reduzierte Anpresskraft erlaubt ein einfaches Öffnen der Gerätetür.

Beider in Fig. IV 2a bis IV 2c dargestellten Variante ist es nicht erforderlich, den Memory-Metall-Aktuator 28 kontinuierlich zu aktivieren, um den Hebel 20 in der verkippten, zur Erhöhung der Anpresskraft erforderlichen Stellung zu halten. Hierfür wird eine mit dem Hebel 20 zusammenwirkende Kulissenschaltung 32 verwendet, die eine darin ausgebildete Führungsnut 34 aufweist, in der ein nicht dargestellter, an dem Hebel 20 angeordneter Führungsstift bewegt werden kann. Soll für einen Betriebszustand des Haushaltsgerätes die Anpresskraft erhöht werden, d. h. der Hebel 20 nach links verkippt und in dieser Stellung gehalten werden, wird der Memory-Metall-Aktuator 28 impulsartig aktiviert. Bei der so bewirkten Kippbewegung des Hebels 20 bewegt sich dessen Führungsstift in der Führungsnut 34 nach links, bis ein Nutbereich 36 oder ein Nutbereich 38 erreicht wird. Nach der impulsartigen Aktivierung des Memory-Metall-Aktuators 28 drückt die Druckfeder 22 den Hebel 20 etwas nach rechts, wobei der Führungsstift aufgrund der von einer Feder 40 erzeugten, die Kulissenschaltung 32 um eine Achse 42 drehendem Kraft in einen Nutbereich 44 gelangt. In Abhängigkeit davon, ob die Feder 40 eine Druckfeder oder eine Zugfeder ist, wird dabei die Kulissenschaltung im Uhrzeigersinn und gegen den Uhrzeigersinn gedreht. Befindet sich der Führungsstift des Hebels 20 in dem Nutbereich 44, wird der Hebel 20 in der in Fig. IV 2c gezeigten Stellung gehalten.

Um den Hebel 20 aus seiner verkippten Stellung zu bringen und somit die Anpresskraft zu reduzieren, wird der Memory-Metall-Aktuator 28 erneut impulsartig aktiviert. Dies bewirkt zunächst eine stärkere Verkippung des Hebels 20 nach links, so dass dessen Führungsstift in den Nutbereich 38 oder den Nutbereich 36 gelangt. Nach Beendigung der Aktivierung des Memory-Metall-Aktuators 28 drückt die Druckfeder 22 den Hebel 20 nach rechts zurück in seine Ausgangsstellung, wobei sich der Führungsstift des Hebels 20 in der Führungsnut 34 in einen Nutbereich 46 zurückbewegt.

### Ausführungsformen - Teil V

Insbesondere bei Waschmaschinen, Spülmaschinen und Trockengeräten ist es erforderlich, Gerätetüren beim Betrieb sicher zu verschließen, d.h. Kräfte zu erzeugen (siehe Teil II), die die Gerätetüren in geschlossenen Stellung halten. Dies kann, wie oben ausgeführt, dadurch erreicht werden, dass mittels eines oder mehrerer Memory-Metall-Aktuatoren Gerätetüren in ihre Schließstellungen gebracht und dort gehalten werden. Bei Türverriegelungen, bei denen beispielsweise mittels Federelementen eine Sicherung von Gerätetüren in den Schließzuständen bewerkstelligt wird, kann es erforderlich sein, dass zum Schließen der Gerätetüren erhebliche Kräfte durch einen Benutzer aufgebracht werden müssen, die den Komfort einschränken. Um einen Benutzer in diesen Fällen beim Schließen von Gerätetüren zu unterstützen, ist es bekannt, Elektromotoren zu verwenden, die beim Schließen der Gerätetüren den Benutzer unterstützende Kräfte erzeugen. Hierbei sind leistungsstarke und große Elektromotoren sowie damit verbundene mechanische Einrichtungen (z.B. Übersetzungen, Zahnräder und dergleichen) erforderlich, wodurch dieser Ansatz kostenaufwändig und in konstruktiver Hinsicht komplex wird.

Memory-Metall-Aktuatoren, die bei kleiner Bauform hohe Kräfte erzeugen können, lösen diese Probleme. Um einen Schließvorgang zu unterstützen, können Memory-Metall-Aktuatoren so in einer Türverriegelung angeordnet werden, dass, wenn ein Schließkolben einer Gerätetür mit entsprechenden Komponenten der Türverriegelung (z.B. eine Greiffalle) in Wirkverbindung kommt, der Memory-Metall-Aktuator so aktiviert wird, dass er die beim Schließvorgang ablaufenden Bewegungen von Komponenten der Türverriegelung wenigstens unterstützt, vorteilhafterweise nahezu ohne durch einen Benutzer aufzubringende Kräfte bewerkstelligt. Dabei wird der Schließkolben und Türverriegelung in einen geschlossenen Zustand gebracht, wodurch die Gerätetür zugezogen wird. Eine Gefährdung von Benutzern, beispielsweise in Form eines Einklemmens von Fingern, wird hierbei dadurch vermieden, dass die den Schließvorgang unterstützende Aktivierung des Memory-Metall-Aktuators erst erfolgt, wenn der Schließkolben mit der Türverriegelung in Wirkverbindung kommt, d.h. die Gerätetür zumindest "angelehnt" ist, also keine Zwischenräume zwischen der Gerätetür und dem Gehäuse des Haushaltsgerätes vorhanden sind.

Die Unterstützung von Schließvorgängen von Haushaltsgerätetüren kann auch durch Memory-Metall-Aktuatoren erreicht werden, die in Bereichen angeordnet sind, in denen Haushaltsgerätetüren drehbar bzw. schwenkbar mit den Gehäusen der entsprechenden Haushaltsgeräte verbunden sind.

Eine Ausführungsform einer Türverriegelung, die den Schließvorgang einer Haushaltsgerätetür unterstützt, ist in Fig. V 1a und V 1b dargestellt. In einem Gehäuse 10 ist eine um eine Achse 12 drehbar gelagerte Drehfalle 14 angeordnet, die mittels einer nicht dargestellten Feder in Richtung gegen den Uhrzeigersinn vorgespannt ist. Die Drehfalle 14 wirkt mit einem Hebel 16 zusammen, der mittels eines Memory-Metall-Aktuators 18 betätigt werden kann, um Drehungen der Drehfalle 14 zu bewirken. Beim Schließen einer einen Schließkloben 20 aufweisenden Haushaltsgerätetür wird ein Ende 22 des Schließklobens in Eingriff mit einer in der Drehfalle 14 ausgebildeten Ausnehmung 22 gebracht. Beim Schließen der Haushaltsgerätetür wird die Drehfalle 14 im Uhrzeigersinn gedreht, wobei durch eine entsprechend gesteuerte Aktivierung des Memory-Metall-Aktuators 18 die Drehung der Drehfalle 14 und damit der Schließvorgang aktiv unterstützt werden. Auf diese Weise wird durch die von dem Memory-Metall-Aktuator 18 erzeugten Kräfte die Haushaltsgerätetür zugezogen und kann in dem geschlossenen Zustand mit erhöhter Kraft gehalten werden, wenn der Memory-Metall-Aktuator 18 auf eine der oben beschriebenen Arten kontinuierlich aktiviert bleibt.

Zum Öffnen der Haushaltsgerätetür wird der Memory-Metall-Aktuator 18 deaktiviert, wodurch die auf die Haushaltsgerätetür wirkenden Schließkräfte abgebaut werden und die Haushaltsgerätetür einfach geöffnet werden kann. Soll bei dieser Türverriegelung nur der Schließvorgang bzw. das Geschlossenhalten der Haushaltsgerätetür unterstützt werden, wird für den Memory-Metall-Aktuator 18 ein Einweg-Memory-Metall-Aktuator verwendet. Eine Unterstützung des Öffnungsvorganges kann beispielsweise durch die Feder bewirkt werden, die für Drehung der Drehfalle 14 gegen den Uhrzeigersinn sorgt, wenn der Memory-Metall-Aktuator 18 deaktiviert ist.

Ferner ist es möglich, das Öffnen der Haushaltsgerätetür mittels eines Einweg-Memory-Metall-Aktuators (nicht dargestellt) zu unterstützen, der bei einer Deaktivierung des Memory-Metall-Aktuators 18 aktiviert wird und Drehungen der Drehfalle 14 gegen den Uhrzeigersinn zumindest unterstützt. Alternativ ist es möglich, für den Memory-Metall-Aktuator 18 einen Zweiweg-Memory-Metall-Aktuator zu verwenden, der beim Schließen (Zuziehen) der Haushaltsgerätetür über seine obere Schwelltemperatur erwärmt wird und vorteilhafterweise zur Sicherung der Haushaltsgerätetür oberhalb seiner oberen Schwelltemperatur gehalten wird.

Eine Abkühlung des Zweiweg-Memory-Metall-Aktuators unter seine untere Schwelltemperatur bewirkt oder unterstützt zumindest Drehungen der Drehfalle 14 gegen den Uhrzeigersinn, wodurch das Öffnen der Gerätetür wenigstens unterstützt wird. Das hierfür erforderliche Abkühlen des Zweiweg-Memory-Metall-Aktuators kann, wie eingangs beschrieben, durch aktive Maßnahmen beschleunigt werden.

Bei der in Fig. V 2a und Fig. V 2b dargestellten Variante der zuvor beschriebenen Ausführungsform wird eine mit dem Hebel 16 zusammenwirkende Kulissenschaltung 26 verwendet. Die Funktion der Kulissenschaltung 26 ist mit der unter Bezugnahme auf Fig. IV 2a bis IV 2c beschriebenen Kulissenschaltung vergleichbar. So kann für den Memory-Metall-Aktuator 18 ein Einweg-Memory-Metall-Aktuator verwendet werden, der zum Zuziehen der Haushaltsgerätetür, d. h. zum Drehen der Drehfalle 14 im Uhrzeigersinn, impulsartig aktiviert wird. Dabei wirkt der Hebel 16 beispielsweise mit einem nicht dargestellten Führungsstift und einer in der Kulissenschaltung 26 ausgebildeten Führungsnut 28 so zusammen, dass nach der impulsartigen Betätigung des Memory-Metall-Aktuators 18 die im Fig. V 2b dargestellte Stellung eingenommen und beigehalten wird. Um die Drehfalle 14 zum Öffnen der Haushaltsgerätetür freizugeben, wird der Einweg-Memory-Metall-Aktuator 18 erneut impulsartig aktiviert, wodurch die in Fig. V 2a gezeigte Stellung eingenommen wird. Der Übergang in diese Stellung kann durch die nicht dargestellte Vorspannfeder für die Drehfalle 14, eine mit dem Hebel 16 zusammenwirkende Druckfeder (nicht dargestellt) und dergleichen bewirkt werden.

### Ausführungsformen - Teil VI

In Fig. VI 1a und VI 1b ist eine Türverriegelung für ein Haushaltsgerät dargestellt, die ein Gehäuse 10, einen Verriegelungsschieber 12 und einen um eine Achse 14 drehbar angeordneten Schließhaken 16 umfasst. An einem Ende weist der Schließhaken 16 eine Nase 18 auf, und der Schließhaken 16 ist mittels einer nicht dargestellten Feder in die in den Figuren gezeigte Stellung nach links vorgespannt. Der Verriegelungsschieber 12 wirkt mit einer Druckfeder 20 zusammen. Nach einem Schließen einer den Schließhaken 16 aufweisenden, nicht dargestellten Gerätetür nimmt die Türverriegelung den in Fig. VI 1a dargestellten Zustand ein. Beim Schließen der Gerätetür wird der Schließhaken 16 durch eine Öffnung 22 in dem Gehäuse 10 bewegt, wobei eine Fläche 24 der Nase 18 entlang einer Fläche 26 des Gehäuses 10 nach innen gleitet und durch eine in dem Verriegelungsschieber 12 ausgebildete Öffnung 20 geführt wird. Wenn die Nase 18 die Öffnung 22 passiert hat, bewegt sich der Schließhaken 16 in die in den Figuren dargestellte vorgespannte Stellung. Dabei wird der Verriegelungsschieber entgegengesetzt zu den von der Druckfeder 20 erzeugten Kräften nach rechts bewegt.

Des Weiteren umfasst die Türverriegelung einen Sperrschieber 30 mit einer durch diesen ausgebildeten Öffnung 32, durch die ein Ende 34 eines L-förmigen Hebels 36 geführt ist. Der Hebel 36 ist um eine Achse 38 drehbar angeordnet und ist an einem Ende 40 mit einer Zugfeder 42 und einem Einweg-Memory-Metall-Aktuator 44 verbunden. In dem in Fig. VI 1a dargestellten aktivierten Zustand des Memory-Metall-Aktuators 44 hält die Zugfeder 42 den Sperrschieber 30 in der dort dargestellten Stellung.

Um die Türverriegelung zu verriegeln, d.h. zu gewährleisten, dass der Schließhaken 16 nicht aus der in Fig. VI 1a gezeigten Stellung bewegt werden kann, wird der Sperrschieber 30 wie in Fig. VI 1b dargestellt wenigstens teilweise durch eine Öffnung 46 in dem Verriegelungsschieber 12 geführt. Dadurch werden Bewegungen des Verriegelungsschiebers 12 verhindert.

Zur Bewegung des Sperrschiebers 30 in die in Fig. VI 1b gezeigte Stellung wird der Memory-Metall-Aktuator 44 aktiviert, wobei er gegen die Zugfeder 42 wirkt und den Hebel 36 gegen den Uhrzeigersinn dreht und dadurch den Sperrschieber 30 nach unten bewegt. Der Memory-Metall-Aktuator 44 kann beispielsweise mit einem PTC-Element (nicht dargestellt), wie oben beschrieben, impulsartig aktiviert und in einem erwärmten Zustand gehalten werden, in dem der Memory-Metall-Aktuator 44 die in Fig. II 1b gezeigte Form beibehält.

Um die Türverriegelung zu entriegeln, wird der Memory-Metall-Aktuator 44 deaktiviert und die Zugfeder 42 sorgt für einen Übergang des Sperrschiebers 30 in die in Fig. VI 1a gezeigte Stellung. Danach kann der Schließhaken 16 durch die Öffnung 22 aus dem Gehäuse 10 entfernt werden, wenn beim Öffnen der nicht dargestellten Haushaltsgerätetür der Schließhaken 16 gegen den Uhrzeigersinn gedreht wird und dabei der Verriegelungsschieber 12 so weit nach links bewegt wird, dass die Nase 18 aus der Öffnung 28 und durch die Öffnung 22 bewegt werden kann.

Alternativ können bei dieser Ausführungsform die Zugfeder 42 und der Memory-Metall-Aktuator 44 so angeordnet sein, dass die Zugfeder eine nach links wirkende, d.h. den Hebel 36 in der in Fig. VI 1b dargestellten Stellung haltende Kraft erzeugt, während der Memory-Metall-Aktuator 44 bei einer Aktivierung Kräfte erzeugt, die den Hebel 36 im Uhrzeigersinn drehen. Bei dieser Variante liegt das Ende 46 des Sperrschiebers 30 auf der oberen Fläche 48 des Verriegelungsschiebers 12 auf, wenn sich der Schließhaken 16 und insbesondere dessen Nase 18 außerhalb des Gehäuses 10 befinden. Wenn bei dem oben beschriebenen Schließvorgang der Verriegelungsschieber 12 von dem Schließhaken 16 bzw. dessen Nase 18 gegen die Druckfeder 20 nach rechts bewegt wird, greift das Ende 26 des Sperrschiebers 30 aufgrund der Kraftwirkung der Zugfeder 42 automatisch in die Öffnung 46 des Verriegelungsschiebers 12 ein und verriegelt somit die Türverriegelung.

Zum Entriegeln wird der Memory-Metall-Aktuator 44 aktiviert, um den Hebel 36 im Uhrzeigersinn zu drehen und damit den Sperrschieber 30 nach oben zu bewegen und den Verriegelungsschieber 12 freizugeben. Diese Ausführungsform sorgt für eine automatische Verriegelung der Haushaltsgerätetür, ohne dass dabei eine Aktivierung des Memory-Metall-Aktuators erforderlich ist.

Bei der in Fig. VI 2a und Fig. VI 2b dargestellten Ausführungsformen wird ein L-förmiger Sperrhebel 50 verwendet, der um eine Achse 52 drehbar angeordnet ist. Eine an einem Schenkel des Sperrhebels 50 angreifende Zugfeder 54 hält den Sperrhebel 50 in der in Fig. VI 2a gezeigten Stellung, bei der ein Ende 56 des Sperrhebels 50 nicht in eine Öffnung 58 in dem Verriegelungsschieber 12 eingreift. Dementsprechend befindet sich diese Türverriegelung in einem nicht verriegelten Zustand.

Zum Verriegeln dieser Türverriegelung wird ein Memory-Metall-Aktuator 60 aktiviert, der den Sperrhebel 50 in die Fig. VI 2b gezeigte Stellung bringt, wobei dessen Ende 56 in die Öffnung 58 eingreift und somit den Verriegelungsschieber 12 sperrt. Zum Entriegeln wird der Memory-Metall-Aktuator 60 deaktiviert und die Zugfeder 54 bewegt den Sperrhebel 50 in die in Fig. VI 2a gezeigte Stellung. Dadurch wird das Ende 56 des Sperrhebels 50 aus der Öffnung 58 in den Verriegelungsschiebers 12 bewegt und dieser freigegeben.

Bei der in Fig. VI 3a und VI 3b dargestellten Variante ist es nicht erforderlich, den Memory-Metall-Aktuator 44 kontinuierlich zu aktivieren, um den Hebel 36 und damit den Sperrschieber 30 in der in Fig. VI 3b bzw. Fig. VI 1b gezeigten Stellung zu halten. Hier wird eine mit dem Hebel 36 zusammenwirkende Kulissenschaltung 62 verwendet, die bei impulsartigen Aktivierungen des Memory-Metall-Aktuators 44, wie oben beschrieben, dafür sorgt, dass der Hebel 36 und somit der Sperrschieber 30 in der zum Verriegeln der Türverriegelung erforderlichen Stellung ohne Aktivierung des Memory-Metall-Aktuators 44 gehalten werden (siehe Fig. VI 3b). Zum Entriegeln wird der Memory-Metall-Aktuator 44 impulsartig aktiviert, wodurch im Zusammenwirken mit der Kulissenschaltung 62 der Hebel 36 etwas gegen den Uhrzeigersinn gedreht und dann von der Zugfeder 42 in die in Fig. VI 3a gezeigte Stellung gebracht wird.

## Patentansprüche

1. Verwendung eines Memory-Metall-Aktuators in einer Türverriegelung eines Haushaltsgeräts, wobei der Memory-Metall-Aktuator einen auf eine bewegliche Komponente (16; 20; 36) der Türverriegelung einwirkenden, in seiner Längsrichtung zugaktivierbaren Memory-Metall-Draht (18; 28; 44) zur Bewegung der Komponente umfasst, wobei die Komponente an einer Schaltkulisse (26; 32; 62) geführt ist, welche zwei abwechselnd in Antwort auf eine Aktivierung des Memory-Metall-Drahts angefahrene Haltepositionen für die Komponente definiert.

2. Verwendung nach Anspruch 1, **gekennzeichnet durch** eine entgegen der Zugwirkung des Memory-Metall-Drahts (44) auf die Komponente wirkende Rückstellfeder (42).

3. Verwendung nach Anspruch 1 oder 2, **gekennzeichnet durch** eine mit dem Memory-Metall-Draht (18; 28; 44) verbundene elektrische Strom- oder Spannungsversorgung zur impulsartigen Aktivierung des Memory-Metall-Drahts.

## Claims

1. Use of a memory metal actuator in a door latch of a domestic appliance, wherein the memory metal actuator comprises a memory metal wire (18; 28; 44) acting upon a movable component (16; 20; 36) of the door latch and being activatable for pulling action in its longitudinal direction, for moving said component, wherein the component is guided on a switching track (26; 32; 62) defining two retention positions for the component which are alternatingly reached in response to activation of the memory metal wire.

2. Use of claim 1, **characterized by** a return spring (42) acting upon the component in opposition to the pulling action of the memory metal wire (44).

3. Use of claim 1 or 2, **characterized by** an electric current or voltage supply connected to the memory metal wire (18; 28; 44), for impulse-like activation of the memory metal wire.

## Revendications

1. Utilisation d'un actionneur à métal doué de mémoire monté dans un dispositif de verrouillage de porte d'appareil domestique, ledit actionneur à métal doué de mémoire comportant un fil de métal doué de mémoire (18 ; 28 ; 44) activable par traction dans son sens longitudinal et agissant sur une composante mobile (16 ; 20 ; 36) du dispositif de verrouillage de porte, ladite composante étant guidée le long d'une coulisse de commutation (26 ; 32 ; 62) qui définit, pour ladite composante, deux positions d'arrêt prises alternativement en réponse à une activation du fil de métal doué de mémoire.

2. Utilisation selon la revendication 1, **caractérisée par** un ressort de rappel (42) agissant sur la composante à l'encontre de l'effet de traction du fil de métal doué de mémoire (44).

3. Utilisation selon la revendication 1 ou 2, **caractérisée par** une alimentation en courant électrique ou en tension, reliée au fil de métal doué de mémoire (18 ; 28 ; 44) pour permettre l'activation de type impulsionnel du fil de métal doué de mémoire.
